# EUROPÄISCHE PATENTSCHRIFT

(11) **EP 0 969 981 B1**
(45) Veröffentlichungstag und Bekanntmachung des Hinweises auf die Patenterteilung: **29.05.2002**
(21) Anmeldenummer: 98912356.7
(22) Anmeldetag: 20.02.1998
(51) Int. Cl.: B60J 7/22

(54) **FAHRZEUG MIT EINEM FALTSCHIEBEDACH UND EINEM VOR DIESEM ANGEORDNETEN SPOILER**
VEHICLE WITH A SLIDING FABRIC ROOF AND A FRONT SPOILER THEREON
VEHICULE A TOIT OUVRANT PLIANT ET A BECQUET MONTE DEVANT CE DERNIER

(30) Priorität: 29.03.1997 DE 19713321
(43) Veröffentlichungstag der Anmeldung: 12.01.2000
(73) Patentinhaber: Volkswagen Aktiengesellschaft, 38436 Wolfsburg (DE)
(72) Erfinder: MACIEJEWSKI, Bernhard, D-38518 Gifhorn (DE); DRESCHER, Thomas, D-38518 Gifhorn (DE); BABEL, Andreas, D-38553 Wasbüttel (DE)
(86) Internationale Anmeldenummer: EP9800993
(87) Internationale Veröffentlichungsnummer: WO9843844

(56) Entgegenhaltungen:
- DE-B- 1 008 592

## Beschreibung

Die Erfindung betrifft ein Fahrzeug entsprechend dem Oberbegriff des Patentanspruchs 1, wie es aus der DE-B-1 008 592 bekannt ist.

Bei der Übertragung des bei einem bestimmten Fahrzeugtyp erfolgreichen Konzepts mit einem einfachen Spoiler auf andere Fahrzeugtypen hat sich herausgestellt, daß die Zug- und Geräuscherscheinungen damit nicht immer zufriedenstellend reduziert werden können. Der Erfolg ist mehr oder weniger stark von der jeweiligen Karosserieform und anderen Faktoren abhängig. Eine Verbesserung zeigen aus der gattungsbildenden DE-B-1 008 592 bekannte Spoiler mit einer Durchlaßöffnung.

Ziel aller derartigen Spoiler ist die Reduzierung der auch als Wummem bekannten Geräusche, die bei teilweise oder ganz geöffnetem Faitschiebedach auftreten können.

Der Erfindung liegt die Aufgabe zugrunde, ein gattungsgemäßes Fahrzeug hinsichtlich der Erreichung dieses Ziels mit einfachen Mitteln zu verbessern.

Die erfindungsgemäße Lösung dieser Aufgabe besteht in den kennzeichnenden Merkmalen des Patentanspruchs 1, vorteilhafte Ausgestaltungen der Erfindung sind Gegenstand der weiteren Patentansprüche.

Die Erfindung wird mit Bezug auf die Zeichnung an drei Ausführungsbeispielen näher erläutert. In der Zeichnung zeigen:
- Figur 1: einen Längsschnitt durch das Fahrzeugdach im vorderen Bereich des geschlossenen Faltschiebedachs mit dem davor angeordneten Spoiler in einer ersten Ausführungsform;
- Figur 2: den gleichen Bereich wie Figur 1, jedoch mit einem Spoiler in einer zweiten Ausführungsform;
- Figur 3: den gleichen Bereich wie Figur 1 und 2, wobei eine dritte Ausführungsform des Spoilers dargestellt ist,
- und Figur 4: in Draufsicht den Spoiler entsprechend Figur 3.

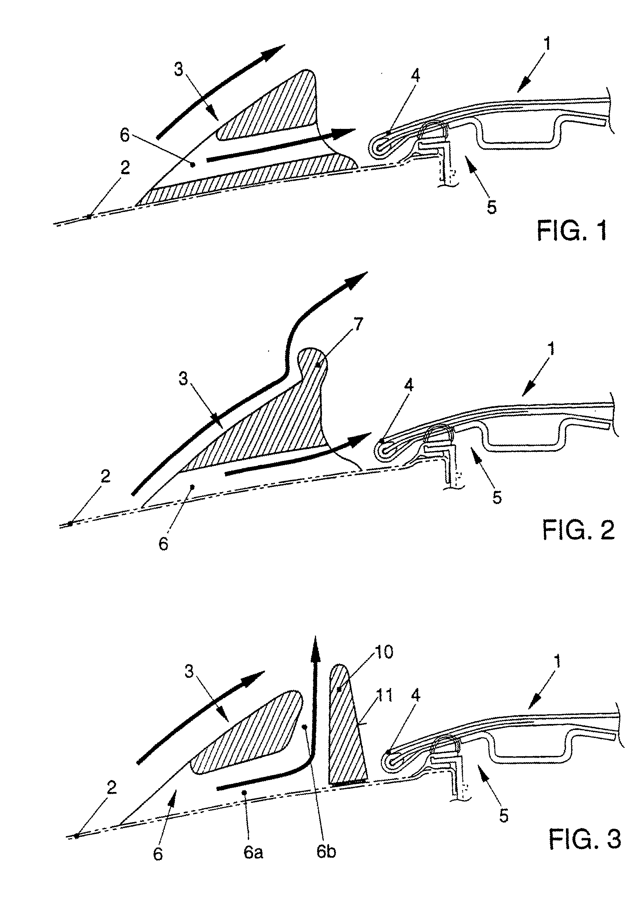

Den Figuren 1 bis 3 gemeinsam ist der vordere Bereich eines im geschlossenen Zustand befindlichen Faltschiebedaches 1, ein in Fahrtrichtung davor befindlicher Abschnitt eines festen Daches 2 und ein darauf befestigter Spoiler 3, der in geringem Abstand vor der das Dach 2 übergreifenden Vorderkante 4 des Faltschiebedaches 1 liegt. Zwischen dem Faltschiebedach 1 und dem Dach 2 sind Mittel 5 zur Abdichtung und Befestigung des Faltschiebedaches 1 erkennbar. Der Spoiler 3 verbessert die Umströmung des Fahrzeugs in dem dargestellten Dachbereich, wodurch bei geschlossenem Faltschiebedach 1 die Windgeräusche und bei geöffnetem Faltschiebedach 1 zusätzlich Zugerscheinungen im Fahrzeuginnenraum reduziert werden.

Dieser Effekt wird erhöht, wenn der Spoiler 3 mit wenigstens einer Durchströmöffnung 6 versehen ist. Dadurch strömt ein Teil des auf den Spoiler 3 auftreffenden Fahrtwindes durch den Spoiler 3 hindurch und bewirkt nach seinem Austritt aus dem Spoiler 3 zusammen mit der über den Spoiler 3 hinweggeleiteten Strömung eine gewisse Luftverwirbelung hinter dem Spoiler 3.

Eine weitere Verbesserung erhält man, wenn der Spoiler 3 gemäß Figur 2 an seiner oberen hinteren Kante einen Fortsatz 7 zur Umlenkung des über die Oberseite des Spoilers 3 hinwegströmenden Luftanteils aufweist. In dem Ausführungsbeispiel nach Figur 2 ist dieser Fortsatz 7 in Form einer an den Grundkörper des Spoilers 3 angeformten wulstartigen Verdickung ausgeführt.

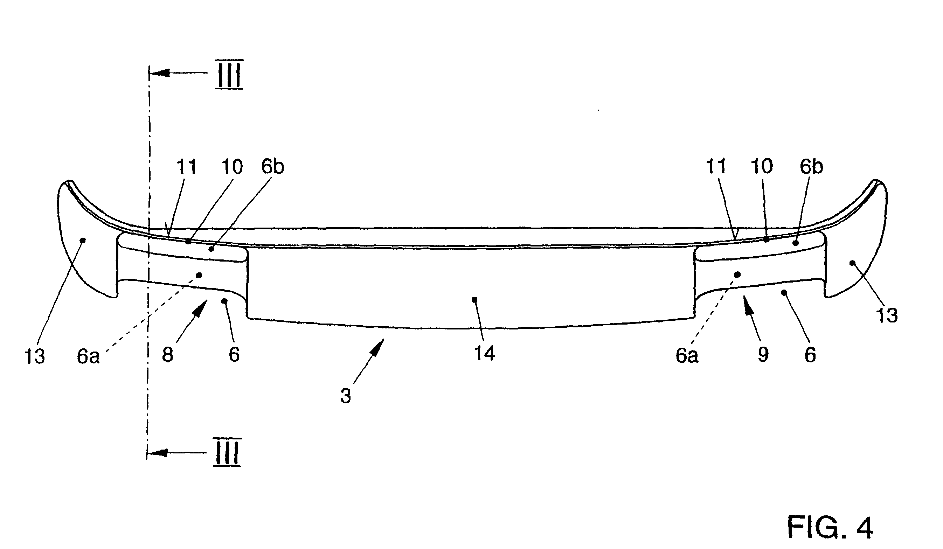

Eine bevorzugte Ausführungsform ist in den Figuren 3 und 4 dargestellt. Dabei zeigt Figur 3 einen Schnitt entsprechend der Schnittlinie III-III in Figur 4, wobei nur die Schnittflächen des Spoilers 3 gezeichnet sind.

Der Spoiler 3 weist zwei seitliche Bereiche 8, 9 mit je einer Durchströmöffnung 6 auf, die in diesem Falle nicht geradlinig durchgehend ist, sondern aus einem dachparallelen ersten Abschnitt 6a und einem sich daran anschließenden aufwärtsgerichteten zweiten Abschnitt 6b besteht. Sie wird nach hinten begrenzt von einem Steg 10, dessen Rückseite 11 bündig übergeht in die Rückseite 12 des Spoilers 3. Die Basis der Durchströmöffnung bildet bei dieser Ausführungsform wie auch bei derjenigen nach Figur 2 die Dachfläche, im Gegensatz zu der Ausführungsform nach Figur 1, wo die Basis Teil des Spoilers 3 selbst ist. Der Steg 10 ist im vorliegenden Fall Bestandteil des Spoilers 3, was fertigungstechnisch zwar vorteilhaft, aber nicht zwingend erforderlich ist. Die Höhe des Steges 10 ist vorwiegend aus optischen Gründen so gewählt, daß seine Oberkante an die verlängerte Kontur der Oberseite des davorliegenden Spoilerabschnitts stößt. Die Bereiche 8, 9 mit ihren Durchströmöffnungen 6 sind gegenüber den benachbarten Bereichen 13, 14 erhaben ausgebildet und schließen gut abgerundet an diese an.

## Patentansprüche

1. Fahrzeug mit einem Faltschiebedach (1) und einem im Bereich seiner Vorderkante (4) auf dem festen Dach (2) angeordneten, sich quer über das Fahrzeug erstreckenden Spoiler (3) zur Reduzierung von Zug- und Geräuscherscheinungen im Fahrzeuginnenraum bei geöffnetem Faltschiebedach (1), der wenigstens eine einen Teil des auf den Spoiler (3) auftreffenden Fahrtwinds aufnehmende Durchlaßöffnung (6) aufweist und dem in seinem in Fahrtrichtung hinteren Bereich eine die spoilernahe Luftströmung beeinflussende Umlenkeinrichtung (7; 10) zugeordnet ist, **dadurch gekennzeichnet, daß** die Umlenkeinrichtung als an eine Oberkante des Spoilers (3) angeformtes oder ein zwischen seiner Durchlaßöffnung (6) und der Vorderkante (4) des Faltschiebdachs (1) auf dem festen Dach (2) angeordnetes, sich im wesentlichen nach oben erstreckendes Teil (7; 10) ausgebildet ist.

2. Fahrzeug nach Anspruch 1, **dadurch gekennzeichnet, daß** das an die Oberkante des Spoilers (3) angeformte Teil als Fortsatz in Form eines Wulstes (7) ausgebildet ist.

3. Fahrzeug nach Anspruch 1, **dadurch gekennzeichnet, daß** das zwischen der Durchlaßöffnung (6) und der Vorderkante (4) des Faitschiebedachs (1) angeordnete Teil als einen Bestandteil des Spoilers (3) bildender Steg (10) ausgebildet ist.

4. Fahrzeug nach Anspruch 1 oder 2, **dadurch gekennzeichnet, daß** die Oberkante des als Steg (10) ausgebildeten, an die Oberkante des Spoilers (3) angeformten Teils in der Verlängerung der Kontur des vor ihm befindlichen Abschnitts des Spoilers (3) liegt.

## Claims

1. Vehicle having a fabric sliding roof (1) and a spoiler (3) which is arranged on the fixed roof (2) in the region of the front edge (4) of the said fabric sliding roof, extends transversely over the vehicle and is intended to reduce the occurrence of draughts and noise in the interior of the vehicle when the fabric sliding roof (1) is open, the said spoiler having at least one passage opening (6), which admits some of the head wind impacting against the spoiler (3), and being assigned, in its region which is at the rear in the direction of travel, a deflecting device (7; 10) which affects the air flow in the vicinity of the spoiler, **characterized in that** the deflecting device is designed as an essentially upwardly extending part (7; 10) which is integrally formed on an upper edge of the spoiler (3) or is arranged on the fixed roof (2) between the passage opening (6) of the said spoiler and the front edge (4) of the fabric sliding roof (1).

2. Vehicle according to Claim 1, **characterized in that** the part which is integrally formed on the upper edge of the spoiler (3) is designed as an extension in the form of a bead (7).

3. Vehicle according to Claim 1, **characterized in that** the part which is arranged between the passage opening (6) and the front edge (4) of the fabric sliding roof (1) is designed as a web (10) forming an integral part of the spoiler (3).

4. Vehicle according to Claim 1 or 2, **characterized in that** the upper edge of the part which is designed as a web (10) and is integrally formed on the upper edge of the spoiler (3) elongates the contour of that section of the spoiler (3) which is situated in front of it.

## Revendications

1. Véhicule présentant un toit ouvrant repliable (1) et un béquet (3) disposé sur le toit fixe (2) dans la région de son bord avant (4), s'étendant transversalement par rapport au véhicule, pour réduire les phénomènes de courant d'air et de bruit dans l'enceinte du véhicule lorsque le toit ouvrant repliable (1) est ouvert et présentant au moins une ouverture de passage (6) recevant une partie de l'air en déplacement venant frapper le bequet (3) et à laquelle est associé un dispositif de déviation (7 ; 10) agissant sur l'écoulement de l'air à proximité du béquet dans la région située à l'arrière dans le sens du déplacement, **caractérisé en ce que** le dispositif de déviation (7 ; 10) est configuré comme partie formée sur un bord supérieur du béquet (3) ou disposée sur le toit fixe (2) entre l'ouverture de passage (6) du béquet et le bord avant (4) du toit ouvrant repliable (1) et s'étendant essentiellement vers le haut.

2. Véhicule selon la revendication 1, **caractérisé en ce que** la partie formée sur le bord supérieur du béquet (3) est configurée comme appendice présentant la forme d'un bourrelet (7).

3. Véhicule selon la revendication 1, **caractérisé en ce que** la partie disposée entre l'ouverture de passage (6) et le bord avant (4) du toit ouvrant repliable (1) est configurée comme latte (10) faisant partie intégrante du béquet (3).

4. Véhicule selon la revendication 1 ou 2, **caractérisé en ce que** le bord supérieur de la partie configurée comme latte (10) formée sur le bord supérieur du béquet (3) est située dans le prolongement du contour de la partie du béquet (3) qui est située en avant d'elle.
